# EUROPEAN PATENT APPLICATION

(11) **EP 4 835 761 A1**
(43) Date of publication of application: **04.11.2026**
(21) Application number: 24912679.8
(22) Date of filing: 20.12.2024
(51) Int. Cl.: G06Q 10/063

(54) **INFORMATION PROCESSING DEVICE AND METHOD**

(30) Priority: 26.12.2023 JP 2023219481
(71) Applicant: Panasonic Intellectual Property Management Co., Ltd., Kadoma-shi, Osaka 571-0057 (JP)
(72) Inventor: JOGAN, Genki, Kadoma-shi, Osaka 571-0057 (JP); KANEKO, Yuki, Kadoma-shi, Osaka 571-0057 (JP)
(74) Representative: Eisenführ Speiser
(86) International application number: PCT/JP2024/045246
(87) International publication number: WO 2025/142792

(57) **Abstract**

An information processing device (3) according to the present disclosure includes: a memory (31) configured to store input data (D10) to be optimized; and a controller (30) configured to perform computational optimization, based on the input data, the computational optimization including iteratively computing a candidate of a solution optimized with respect to one or more operational metrics. The input data includes a constraint condition that limits the optimized solution in the computational optimization. The controller is configured to: store a computation history into the memory, the computation history including a solution violating the constraint condition among a plurality of solutions computed as candidates in the computational optimization (S12); and generate a plan with reference to the stored computation history, the plan improving at least a part of the operational metrics from a result of the computational optimization (S14).

## Description

### TECHNICAL FIELD

The present disclosure relates to an information processing device and method for putting a numerical simulation technique such as computational optimization into practical use.

### BACKGROUND

Patent Document 1 discloses a process control system having a process simulator and a controller that controls the operation of a hot-blast stove or the like in the steel industry. The process control system uses a plurality of evaluation quantities as indices for evaluating the performance of the hot-blast stove as objective functions, solves a multi-objective optimization problem for the objective functions, and obtains and stores a plurality of Pareto optimal solutions offline in advance. Thereafter, the process control system changes the Pareto optimal solution to any of the plurality of stored Pareto optimal solutions in accordance with the change in the operation condition, and sets a target value pattern corresponding to the changed Pareto optimal solution in the controller. Accordingly, the process control system can set a target value that is flexible and as appropriate as possible in the manufacturing process without performing computational optimization again even when the operation condition is changed.

### Citation list

Patent Document 1: JP 2013-246560 A

### SUMMARY

The present disclosure provides an information processing device and method capable of improving the feasibility of a simulation technique for optimization of a plan having a constraint condition.

An information processing device according to the present disclosure includes: a memory configured to store input data to be optimized; and a controller configured to perform computational optimization, based on the input data, the computational optimization including iteratively computing a candidate of a solution optimized with respect to one or more operational metrics. The input data includes a constraint condition that limits the optimized solution in the computational optimization. The controller is configured to: store a computation history into the memory, the computation history including a solution violating the constraint condition among a plurality of solutions computed as candidates in the computational optimization; and generate a plan with reference to the stored computation history, the plan improving at least a part of the operational metrics from a result of the computational optimization.

These general and specific aspects may be implemented using a system, a method, a computer program, or a combination thereof.

According to the information processing device and method of the present disclosure, it is possible to improve the feasibility of the simulation technique for optimization of a plan having a constraint condition.

### BRIEF DESCRIPTION OF THE DRAWINGS

FIG. 1 is a diagram for explaining a plan optimization system according to a first embodiment of the present disclosure;
FIG. 2 is a block diagram illustrating a configuration of a scheduler terminal in the plan optimization system;
FIG. 3 is a block diagram illustrating a configuration of an optimization server in the plan optimization system;
FIG. 4 is a diagram illustrating a structure of lot data in the plan optimization system;
FIG. 5 is a diagram illustrating a structure of product changeover data in the plan optimization system;
FIG. 6 is a diagram illustrating a structure of facility power data in the plan optimization system;
FIG. 7 is a diagram illustrating a structure of facility operation data in the plan optimization system;
FIG. 8 is a diagram illustrating a structure of lot constraint data in the plan optimization system;
FIG. 9 is a sequence diagram for explaining the operation of the plan optimization system in the first embodiment;
FIG. 10 is a diagram illustrating a structure of a search history database in the plan optimization system;
FIG. 11 is a diagram showing a display example of an optimization result in the plan optimization system;
FIG. 12 is a diagram showing an example of a user interface of a simulation operation in the plan optimization system;
FIG. 13 is a diagram showing a display example of a simulation result in the plan optimization system;
FIG. 14 is a diagram showing another example of the user interface of the simulation operation in the plan optimization system;
FIG. 15 is a flowchart illustrating computational optimization processing in the plan optimization system;
FIG. 16 is a sequence diagram for explaining operation of a plan optimization system in a second embodiment;
FIG. 17 is a flowchart illustrating simulation processing of constraint relaxation in the plan optimization system;
FIG. 18 is a flowchart illustrating an example of computational optimization processing in a first modification of the plan optimization system;
FIG. 19 is a diagram for explaining a second modification of the plan optimization system;
FIG. 20 is a diagram showing a modification of plan input data in a third modification of the plan optimization system; and
FIG. 21 is a diagram showing a modification of the search history database in the third modification of the plan optimization system.

### DETAILED DESCRIPTION

Hereinafter, embodiments will be described in detail with reference to the drawings as appropriate. However, unnecessarily detailed description may be omitted. For example, detailed description of well-known matters and redundant description of substantially the same configuration may be omitted. This is to avoid unnecessary redundancy of the following description and to facilitate understanding by those skilled in the art.

The applicant provides the accompanying drawings and the following description in order for those skilled in the art to fully understand the present disclosure, and does not intend to limit the subject matter described in the claims by the accompanying drawings and the following description.

### First Embodiment

Hereinafter, a first embodiment of the present disclosure will be described with reference to the drawings.

### 1. Configuration

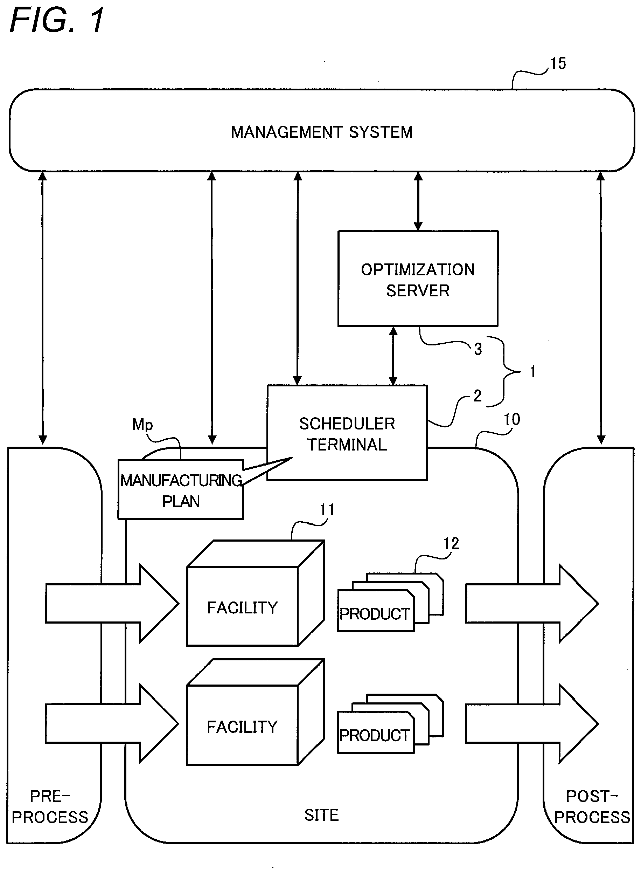

A configuration of a system using a simulation device according to a first embodiment will be described with reference to FIG. 1.

### 1.1 System Overview

For example, a plan optimization system 1 according to the present embodiment includes a scheduler terminal 2 and an optimization server 3, as illustrated in FIG. 1. For example, the present system 1 is applied to an application for automatically creating a manufacturing plan Mp in a site 10 such as a manufacturing factory. The manufacturing plan Mp is an example of a plan indicating a schedule in which time slots for manufacturing the products 12 of a plurality of lots are allocated to the plurality of facilities 11 in the site 10 in a predetermined period such as one month.

For example, at the site 10, a plurality of types of products 12 are manufactured in different lots. The lot is a unit for managing the manufacture of the product 12 in the site 10. Hereinafter, an example in which the number of the facilities 11 in the site 10 is two will be described, but the present system 1 is not particularly limited thereto. In the present embodiment, the number of the facilities 11 in the site 10 may be three or more, or may be one. In addition, one facility 11 in the present embodiment may correspond to one production line, and one production line may include a plurality of mechanical facilities.

In the present system 1, the scheduler terminal 2 and the optimization server 3 are connected to each other for communication via a communication network such as the Internet. The optimization server 3 executes numerical calculation (i.e., computational optimization) for optimizing the manufacturing plan Mp from the viewpoint of management of various resources in the site 10, for example. The scheduler terminal 2 visualizes, to the user, the manufacturing plan Mp obtained by the optimization server 3.

The plan optimization system 1 of the present embodiment provides a simulation that visualizes, to the user, the effect of the resource management and the like in the case where the constraint on the site 10 imposed in the computational optimization is changed. According to the present system 1, it is possible to smooth or enhance planning by the user such as a manager of the site 10 or a person in charge of data analysis. The present system 1 can realize such a simulation operation with high calculation efficiency (details will be described later).

The manufacturing plan Mp created in the present system 1 is registered in a host management system 15 that manages the site 10, for example. For example, the scheduler terminal 2 and the optimization server 3 of the present system 1 are connected to the management system 15 via a communication network for enabling data communication.

For example, the management system 15 can manage or control the operation status of the facility 11 of the site 10 according to the registered manufacturing plan Mp. The management system 15 may receive various data from the site 10 and transmit various analysis results as feedback, or may control the operation of the facility 11 in the site 10. In addition to a process (e.g., a manufacturing process) performed by the site 10, the management system 15 may manage its pre/post-process (e.g., material procurement). The management system 15 includes a computer such as a server device.

Hereinafter, the configurations of the scheduler terminal 2 and the optimization server 3 in the present system 1 will be described.

### 1.2 Terminal Configuration

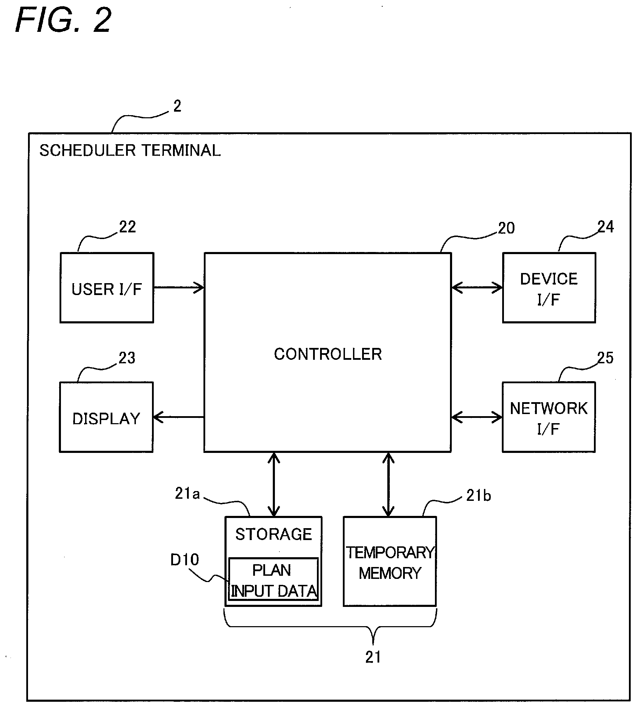

The configuration of the scheduler terminal 2 in the present system 1 will be described with reference to FIG. 2. FIG. 2 is a block diagram illustrating a configuration of the scheduler terminal 2.

The scheduler terminal 2 is an information terminal such as a personal computer, a tablet terminal, or a smartphone. The scheduler terminal 2 illustrated in FIG. 2 includes a controller 20, a memory 21, a user interface 22, a display 23, a device interface 24, and a network interface 25. Hereinafter, the interface may be abbreviated as "I/F".

For example, the controller 20 includes a CPU or an MPU that realizes a predetermined function in cooperation with software, to control the overall operation of the scheduler terminal 2. The controller 20 reads data and programs stored in the memory 21 and performs various arithmetic processing to realize various functions. For example, the controller 20 executes a program including a command group for realizing various processing of the scheduler terminal 2 in the present system 1. The program is, for example, an application program, and may be provided from the communication network 10 or the like, or may be stored in a portable recording medium.

The controller 20 may be a hardware circuit such as a dedicated electronic circuit designed to implement a predetermined function or a reconfigurable electronic circuit. The controller 20 may be configured by various semiconductor integrated circuits such as a CPU, an MPU, a GPU, a GPGPU, a TPU, a microcomputer, a DSP, an FPGA, and an ASIC.

The memory 21 is a storage medium that stores programs and data necessary for realizing the functions of the scheduler terminal 2. As illustrated in FIG. 2, the memory 21 includes a storage 21a and a temporary memory 21b.

The storage 21a stores parameters, control programs, and the like for implementing predetermined functions. For example, the storage 21a is an HDD or an SSD. For example, the storage 21a stores the program, a plan input data D10 (details will be described later) to be planned by the present system 1, and the like.

The temporary memory 21b is a RAM such as a dynamic random access memory (DRAM) or a static random access memory (SRAM), and temporarily stores (i.e., holds) date. For example, the temporary memory 21b may function as a work area of the controller 20, or may be configured by a storage area in an internal memory of the controller 20. The plan input data D10 may be held in the temporary memory 21b.

The user interface 22 is a user interface device operated by a user. For example, the user interface 22 is a keyboard, a mouse, a touch pad, a touch panel, a button, a switch, and a combination thereof. The user interface 22 is an example of an input interface that acquires various information input by a user operation.

For example, the display 23 is a liquid crystal display or an organic light-emitting diode display. The display 23 displays information indicating a check result by the present system 1, for example. The display 23 may display various information such as various icons for operating the user interface 22 and information input from the user interface 22.

The device I/F 24 is a circuit for connecting an external device to the scheduler terminal 2. The device I/F 24 is an example of a communication interface that performs communication according to a predetermined communication standard. The predetermined standard includes USB, HDMI, IEEE1394, WiFi, and Bluetooth. The device I/F 24 may be an input interface that receives various information from an external device in the scheduler terminal 2.

The network I/F 25 is a circuit for connecting the scheduler terminal 2 to the communication network 10 via a wireless or wired communication line. The network I/F 25 is an example of a communication interface that performs communication conforming to a predetermined communication standard. The predetermined communication standard includes communication standards such as IEEE802. 3, IEEE802. 11a/11b/11g/11ac/11ad/11ax or the like. The network I/F 25 may be an input interface for receiving various information via the communication network 10 in the scheduler terminal 2.

The configuration of the scheduler terminal 2 as described above is an example, and the configuration of the scheduler terminal 2 is not limited thereto. The input interface in the scheduler terminal 2 may be realized by cooperation with various software in the controller 20 or the like. The input interface in the scheduler terminal 2 may acquire various information by reading the various information stored in various storage media (e.g., the storage 21a) to a work area (e.g., the temporary storage 21b) of the controller 20.

### 1.3 Server Configuration

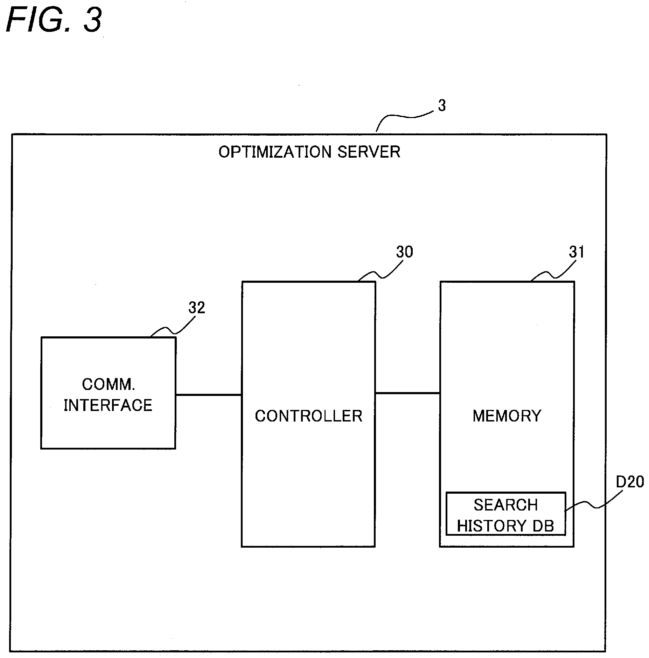

The configuration of the optimization server 3 in the present system 1 will be described with reference to FIG. 3. FIG. 3 is a block diagram illustrating a configuration of the optimization server 3 in the present system 1. The optimization server 3 is an example of a simulation device as an example of an information processing device in the present system 1.

The optimization server 3 illustrated in FIG. 3 includes a controller 30, a memory 31, and a communication interface 32. The optimization server 3 is configured by one or more computers.

For example, the controller 30 includes a CPU, an MPU, or the like that realizes a predetermined function in cooperation with software, to control the operation of the optimization server 3. The controller 30 reads data and programs stored in the memory 31 and performs various arithmetic processing to realize various functions. For example, the controller 30 executes a program including a command group for realizing various processing as the simulation device or the information processing device in the present system 1. The various programs described above may be included in a program product, may be provided from the communication network 10 or the like, or may be stored in a portable recording medium.

The controller 30 may be a hardware circuit such as a dedicated electronic circuit designed to realize a predetermined function or a reconfigurable electronic circuit. The controller 30 may be configured by various semiconductor integrated circuits such as a CPU, a GPU, a TPU, an MPU, a microcomputer, a DSP, an FPGA, and an ASIC.

The memory 31 is a storage medium that stores programs and data necessary for realizing the functions of the optimization server 3, and includes an HDD or an SSD, for example. For example, the memory 31 may include a DRAM or an SRAM, and may function as a work area of the controller 30. For example, the memory 31 stores a search history database D20 described later.

The communication interface 32 is an I/F circuit for performing communication according to a predetermined communication standard, and communicably connects the optimization server 3 to the communication network 10, an external device, or the like. The predetermined communication standard includes IEEE802. 3, IEEE802. 11a/11b/11g/11ac/11ad/11ax, USB, HDMI, IEEE1394, WiFi, Bluetooth, and the like. The communication interface 32 is an example of an input interface that inputs a user operation by data communication with the scheduler terminal 2. The communication interface 32 may be an example of an output interface that outputs various information from the optimization server 3.

The optimization server 3 in the present system 1 is not limited to the above configuration, and may have various configurations. The present system 1 may be implemented in cloud computing. The hardware resources that implement the functions of the optimization server 3 may be shared with the management system 15. Further, a part or all of the functions of the optimization server 3 may be implemented in the scheduler terminal 2.

### 1.3 Structure of Plan Input Data

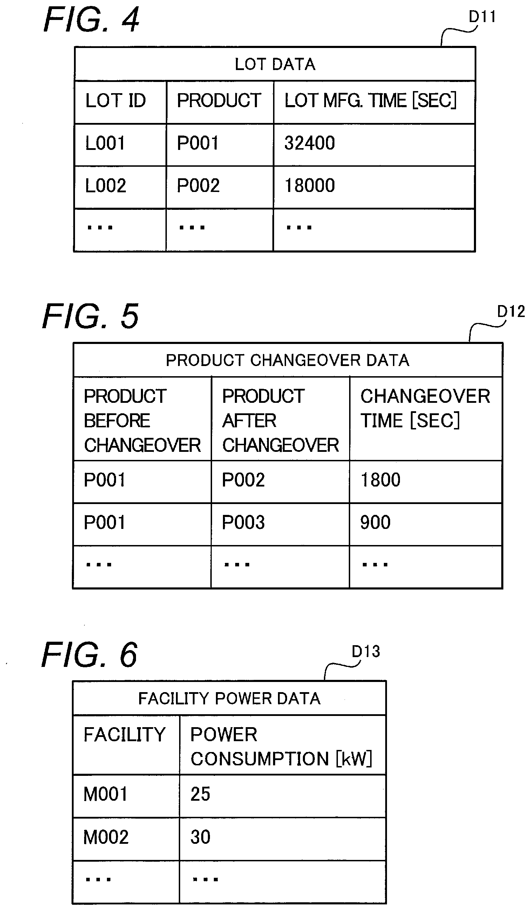

An example of the structure of the plan input data D10 used as an example of the input data in the present system 1 will be described with reference to FIGS. 4 to 8. For example, the plan input data D10 of the present system 1 includes, as shown in FIGS. 4 to 8, lot data D11, product changeover data D12, facility power data D13, and lot constraint data D15. Further, the plan input data D10 may include the manufacturing plan Mp before being optimized.

The lot data D11 is an example of the input information for managing a plurality of lots to be planned in the present system 1. As shown in FIG. 4, the lot data D11 is managed by associating "lot ID", "product name", and "lot manufacturing time" with each other. The lot data D11 may further include "number of products" indicating the number of products included in one lot.

In the lot data D11, "lot ID" indicates an identification number of a lot. The "product" indicates identification information of the product 12 to be manufactured in the lot indicated by the associated lot ID, and indicates e.g. the name of the product 12. The "lot manufacturing time" indicates a time length presumed to be taken to manufacture the products of the lot in units of seconds, for example. The "product" may be different for each lot, or there may be a plurality of lots having the same product.

The product changeover data D12 is an example of input data for managing the time required to change the product 12 manufactured in the facility 11 of the site 10. For example, as illustrated in FIG. 5, the product changeover data D12 manages "product before changeover", "product after changeover", and "changeover time" in association with each other.

For example, the "product before changeover" and the "product after changeover" in the product changeover data D12 comprehensively include combinations of two types of products 12. The "changeover time" indicates a time length presumed to be taken for setup when switching from the "product before changeover" to the "product after changeover" is performed, for example, in units of seconds.

The facility power data D13 is an example of input data for managing the amount of power consumed by the facility 11 in the site 10 during operation. For example, the facility power data D13 is managed by associating "facility" and "power consumption" with each other, as illustrated in FIG. 6.

In the facility power data D13, "facility" indicates identification information of the facility 11, and indicates a name of the facility 11, for example. The "power consumption" indicates the amount of power consumption per unit time during the operation of the facility 11 in kW, for example. The facility power data D13 is not limited to the above, and may manage power in various states of the facility 11, such as during standby, during operation, or at the time of activation.

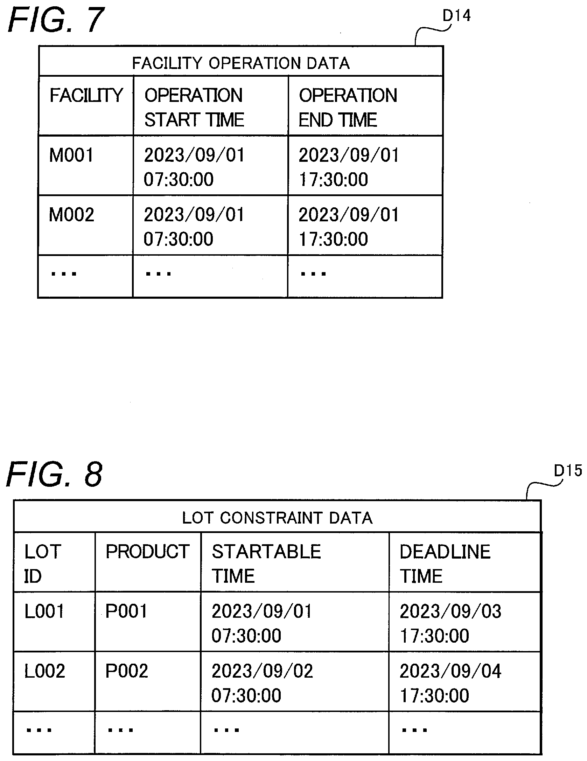

The facility operation data D14 manages a time zone in which each of the facilities 11 in the site 10 operates. For example, as illustrated in FIG. 7, the facility operation data D14 manages "facility", "operation start time", and "operation end time" in association with each other. The "operation start time" indicates a time at which the facility 11 is scheduled to start operation, and the "operation end time" indicates a time at which the facility 11 is scheduled to end operation, and the times are managed for each date, for example.

The lot constraint data D15 is an example of a constraint on the manufacturing time of each lot. For example, as illustrated in FIG. 8, the lot constraint data D15 manages "lot ID", "product name", "startable time", and "deadline time" in association with each other.

In the lot constraint data D15, the "startable time" indicates the earliest time at which the production of the lot can be started. The "deadline time" indicates the last time at which the end of the production of the lot is permitted. The "startable time" and the "deadline time" are examples of constraint conditions that impose constraints on the output of the computational optimization. The constraint conditions as described above can be determined on a person-dependent basis in consideration of, for example, a demand from a post-process of the site 10, a demand from a supply destination of the product 12, or a timing of material procurement of the product 12.

### 2. Operation

The operation of the present system 1 configured as described above will be described below. First, the finding of the operation of the present system 1 by the inventor of the present application will be described.

The inventor of the present application has focused on the current situation in which relaxation of the constraint conditions could not been examined as, even when there is room for relaxation of the constraint conditions such as the deadline time (FIG. 8) for each lot described above in the site 10 (FIG. 1), the effect of the relaxation is unclear. Therefore, the inventor of the present application has earnestly studied the realization of the operation of the simulation for visualizing the effect obtained when the constraint condition is relaxed to the user in the optimization of the manufacturing plan Mp by the present system 1.

As a result of intensive studies by the inventor of the present application, a new problem has been found that based on a huge number of patterns for relaxing the constraint conditions in the site 10, the calculation load gets excessive in the exhaustive computational optimization. Therefore, the inventor of the present application has made intensive studies on the new problem for actually applying the simulation operation in the site 10.

As a result of such intensive studies, the inventor of the present application has devised the present system 1, based on conceiving the idea of utilizing a solution candidate, obtained as a by-product within the search for the optimal solution of the manufacturing plan Mp in the initial computational optimization, for the subsequent simulation operation. According to the present system 1, the effect of relaxing the constraint condition is obtained from the by-product of the original computational optimization without particularly redoing the computational optimization, and an excessive increase in the calculation load in the simulation operation can be avoided. Hereinafter, the operation of the present system 1 will be described in detail.

### 2.1 Overall Operation

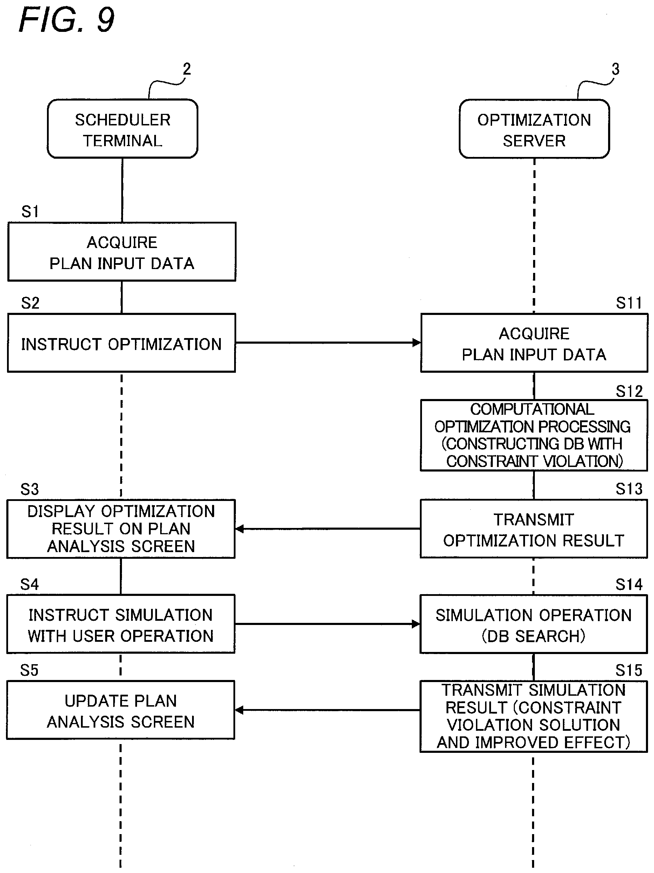

The overall operation of the present system 1 will be described with reference to FIG. 9. FIG. 9 is a sequence diagram for explaining the operation of the plan optimization system 1 in the first embodiment.

First, the present system 1 acquires the plan input data D10 via the user interface 22 in the scheduler terminal 2, for example (S1). For example, the controller 20 of the scheduler terminal 2 causes the display 23 to display a predetermined data entry screen, to receive a user operation of entering the plan input data D10 via the user interface 22.

In the scheduler terminal 2, a part or all of the plan input data D10 may be stored in the memory 21 in advance, and the controller 20 may acquire the plan input data S1 from the memory 21 in step S1. In the step S1, the various datasets D11 to D15 illustrated in FIGS. 4 to 8 and the initial manufacturing plan Mp before being optimized are acquired as the plan input dataset D10, for example.

Next, the scheduler terminal 2 instructs the optimization server 3 to execute the computational optimization (S2). For example, the controller 20 transmits the acquired plan input data D10 to the optimization server 3 via the network I/F 25 or the like in accordance with a user operation in the user interface 22 (S2).

For example, the optimization server 3 receives the instruction from the scheduler terminal 2 via the communication interface 32, thereby acquiring the plan input data D10 to be optimized (S11). The controller 30 stores the plan input data D10 acquired in the step S11 into the memory 31, for example. A part or the whole of the plan input data D10 may be stored in advance in the memory 31 of the optimization server 3.

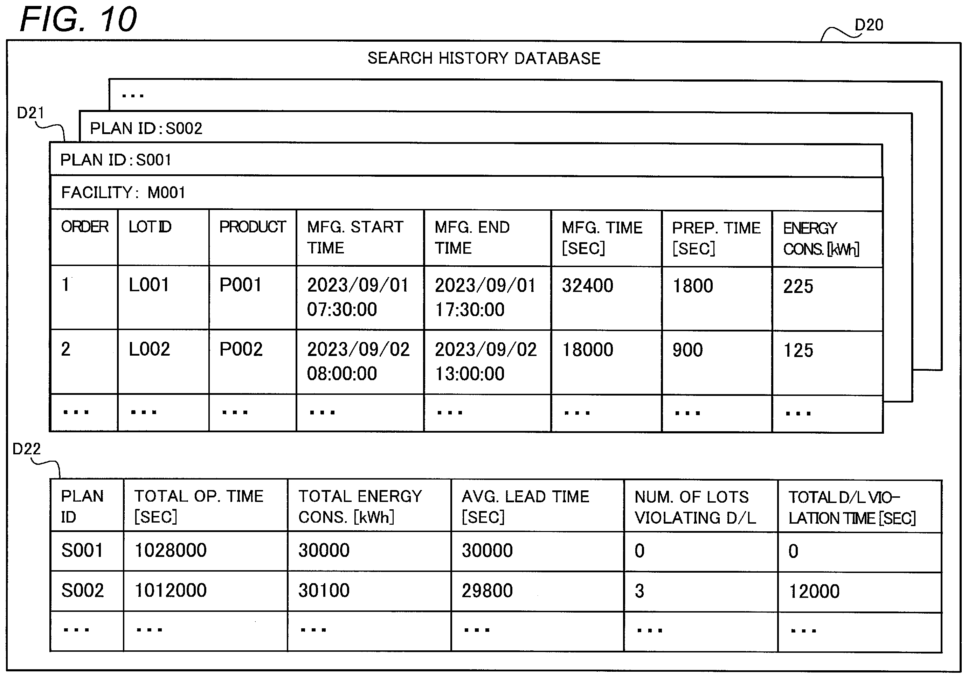

Next, based on the acquired plan input data D10, the controller 30 of the optimization server 3 executes the computational optimization processing (S12). The computational optimization processing (S12) stores solution candidates obtained under the process as a database (see FIG. 10), including a solution violating the constraint condition (i.e., the constraint violation solution) during the search for the manufacturing plan Mp of the optimal solution according to the constraint condition of the plan input data D10. The details of the computational optimization processing (S12) will be described later.

As an output of the computational optimization processing (S12), the optimization server 3 transmits various calculation results for the manufacturing plan Mp of the optimal solution within the range according to the constraint condition as described above to the scheduler terminal 2 via the communication interface 32 (S13). For example, the calculation result includes details of the manufacturing plan Mp of the optimal solution and calculation values of various operational metrics indicating the effect thereof.

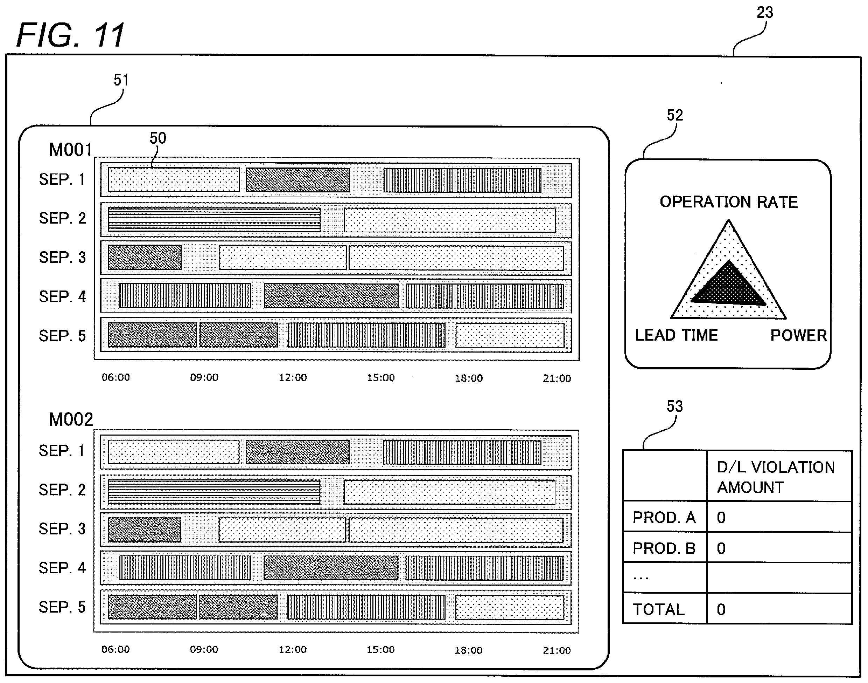

For example, the scheduler terminal 2 receives the calculation result of the manufacturing plan Mp of the optimal solution from the optimization server 3 via the network I/F 25, and controls the display 23 to display a plan analyzing screen (see FIG. 11) based on the received calculation result (S3). The plan analysis screen of the scheduler terminal 2 is a user interface screen that visualizes the optimization result of the manufacturing plan Mp to the user and prompts the user to perform analysis such as simulation for trying various changes.

The controller 20 receives a user operation in the user interface 22 with the plan analyzing screen (S4) displayed on the display 23, and instructs the optimization server 3 to execute a simulation operation according to the user operation (S4). The scheduler terminal 2 sends a simulation instruction including a desired change item requested by the user from the manufacturing plan being displayed to the optimization server 3 via, for example, the network I/F 25 (S4).

In response to the simulation instruction (S3) from the scheduler terminal 2, the controller 30 of the optimization server 3 searches the search history database D20 for the manufacturing plan Mp that most closely matches the user request as the simulation operation of the present embodiment (S14). The data retrieval of the step S14 is performed within a range including the manufacturing plan Mp of the constraint solution stored in the search history database D20 in the present system 1.

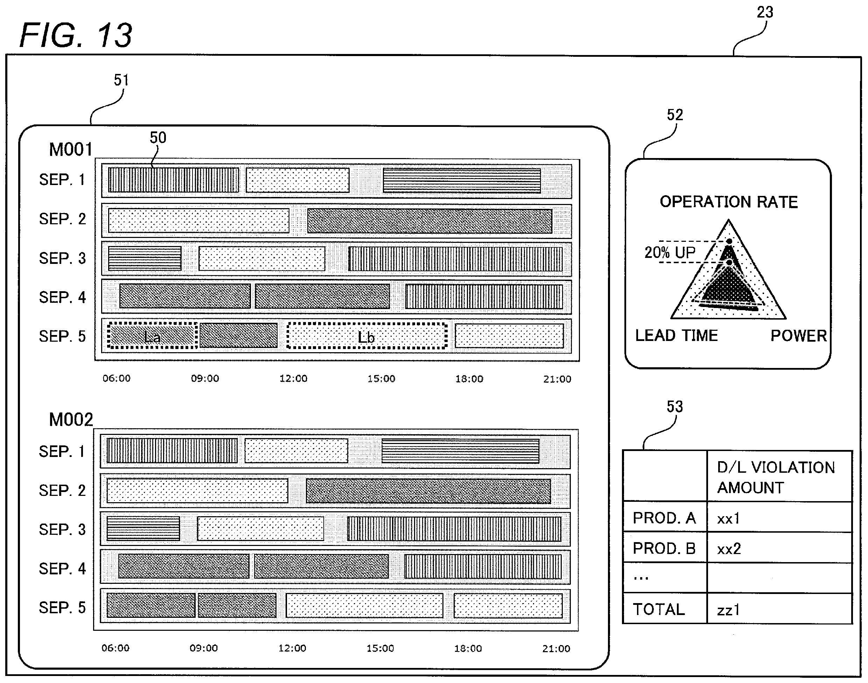

Next, the optimization server 3 generates information indicating the result of the simulation operation as described above, to transmit the information to the scheduler terminal 2 via the communication interface 32 (S15). The information on the simulation result is an example of simulation information including, for example, the content of the changed manufacturing plan Mp, the degree of constraint violation by the manufacturing plan Mp, and the calculated values of various operational metrics (see FIG. 13).

The scheduler terminal 2 receives the information on the simulation result from the optimization server 3 via the network I/F 25, and based on the received information, controls the display 23 so as to update the plan analyzing screen (see FIG. 13) , for example (S5). Details of the simulation operation in steps S3 to S5 will be described later.

In the present system 1, the scheduler terminal 2 may repeat the processing of steps S3 to S5 a plurality of times in accordance with a user operation. At this time, the optimization server 3 repeatedly executes the steps S14 and S15 in accordance with the instruction from the scheduler terminal 2.

The present system 1 registers the final manufacturing plan Mp in the management system 15 (FIG. 1) by the network I/F 25 of the scheduler terminal 2 or the communication from the communication interface 32 of the optimization server 3, to end the processing shown in FIG. 9, for example.

According to the operation of the present system 1 as described above, by using the search history database D20 constructed during the execution of the computational optimization (S12), the simulation operation according to the subsequent user operation can be realized by a simple process such as data search (S3 to S5, S14). In this way, the present system 1 can improve the processing efficiency of the simulation operation.

For example, according to the present system 1, as the simulation operation (S14) after the computational optimization (S2) by the optimization server 2 has the lower processing load than that of the computational optimization (S2), the simulation result can be flexibly provided to the user of the site 10, resulting in facilitating use of the present system 1. For example, the user can give a simulation instruction on the plan analysis screen of the scheduler terminal 2, check the result, and give a simulation instruction for further improvement. Thus, it is possible to facilitate realization of the manufacturing plan Mp for improving the resource management of the site 10.

Hereinafter, an operation example in which the present system 1 performs the simulation operation that enables the constraint condition based on the deadline time for each lot to be changed will be described. In the present system 1, the constraint condition enabled to be changed is not limited to the deadline time, and may be the startable time. When having a constraint condition such as an execution order among the plurality of lots, the present system 1 may perform the simulation operation to determine whether such a constraint condition can be changed.

### 2.2 Search History Database

The search history database D20 constructed in step S12 of FIG. 9 will be described with reference to FIG. 10.

FIG. 10 illustrates a structure of the search history database D20 in the present system 1. For example, the search history database D20 includes a history plan data D21 and a violation effect data D22 as illustrated in FIG. 10.

The history plan data D21 is an example of a computation history for managing the plurality of manufacturing plans Mp stored in the search history of the computational optimization (S12 in FIG. 9). For example, as illustrated in FIG. 10, the history plan data D21 manages "facility", "order", "lot ID", "product", "manufacturing start time", "manufacturing end time", "manufacturing time", "preparation time", and "energy consumption" in association with each other for each "plan ID".

In the history plan data D21, "plan ID" indicates identification information of the manufacturing plan Mp to be managed. For example, the "order" indicates, for each "facility", a chronological order in which the lot indicated by the "lot ID" in the manufacturing plan Mp is allocated. The "manufacturing start time" indicates a time at which the manufacturing of the "product" of the lot is scheduled to start, the "manufacturing end time" indicates a time at which the manufacturing of the product of the same lot is scheduled to end, and the "manufacturing time" indicates a time length from the manufacturing start time to the manufacturing end time for each lot in seconds (the same applies hereinafter). The "preparation time" indicates a time required for preparation for starting the manufacturing of the lot. The "energy consumption" indicates the amount of energy required for manufacturing the lot in kWh.

The violation effect data D22 is an example of a computation history for managing the calculated value of the effect corresponding to the management indicator of each manufacturing plan Mp and the degree of constraint violation. For example, as illustrated in FIG. 10, the violation effect data D22 manages "plan ID", "total operation time [sec]", "total energy consumption [kWh]", "average lead time [sec]", "number of lots violating deadline", and "total deadline violation time [sec]" in association with each other.

In the violation effect data D22, the "total operating time" indicates the total time of the manufacturing time and the preparing time (at history plan D21) of all the lots by the plurality of facilities 11 in the manufacturing plan Mp indicated by the "plan ID" in seconds. For example, the total operating time may be the sum or average of the operating times (= manufacturing time + preparation time) of the plurality of facilities 11, or may be a net time in consideration of overlapping time periods in the operating times.

The "total energy consumption" indicates the total energy consumption of all lots by the plurality of facilities 11 in the manufacturing plan Mp in kWh. The "average lead time" indicates an average time of the lead time (= manufacturing time + preparation time) of each of all the lots by the plurality of facilities 11 in the manufacturing plan Mp in units of seconds.

The "number of lots violating the deadline" indicates the number of lots having a constraint violation that the deadline time (FIG. 8) is passed, among all the lots in the manufacturing plan Mp. The "total deadline violation time" indicates the total time of the time difference from the deadline time to the production end time for each lot having the above-described constraint violation (i.e., deadline violation) in the production plan Mp.

According to the search history database D20 of the present system 1 as described above, the effect of each manufacturing plan Mp and the degree of constraint violation are associated in the violation effect data D22 for various manufacturing plans Mp managed in the history plan data D21. This makes it possible to search for various manufacturing plans Mp from the correspondence between constraint violations and effects.

The search history database D20 as described above is obtained using the calculation result in the computational optimization processing (S12 in FIG. 9) by the optimization server 2, and can be constructed efficiently.

### 2.3 Simulation Operation of User Request

The simulation operation of the present system 1 according to the user operation in the steps S3 to S5 in FIG. 9 will be described with reference to FIGS. 11 to 14.

FIG. 11 shows a display example of a plan analyzing screen displayed in the step S12 as a result of the computational optimization processing (S3 in FIG. 9). For example, the plan analysis screen on the display 23 of the scheduler terminal 2 includes a plan display field 51, an operational metric chart 52, and a constraint violation table 53, as illustrated in FIG. 11.

The plan display field 51 includes a plurality of lot bands 50 allocated in chronological order as a schedule for each facility 11 so as to indicate the content of the manufacturing plan Mp to be displayed, for example. The lot band 50 indicates a time period allocated for manufacturing the product 12 of the corresponding lot.

The operational metric chart 52 is a radar chart that visualizes the magnitudes of a plurality of operational metrics such as "operation rate", "lead time", and "power" in the manufacturing plan Mp to be displayed. The "operation rate" indicates a ratio of the total manufacturing time (FIG. 10) to the total operating time, for example. The "lead time" indicates an average lead time in the history plan data D21 (FIG. 10), for example. The "power" indicates the amount of energy consumption in the history plan data D21, for example.

For example, the constraint violation table 53 indicates the amount of deadline violation for each product 12 and the total amount of deadline violation. For example, the deadline violation amount is a deadline violation time of the lot of the product 12, and is an example of a constraint violation amount. The deadline violation amount for each product 12 (or each lot) may be calculated by the controller 20 or may be stored in the search history database D20.

In the example of FIG. 11, the manufacturing plan Mp satisfies the constraint condition by the optimal solution of the result of the initial computational optimization processing (S12 in FIG. 9), and thus the various constraint violation amounts are "0". At this time, the magnitude of the operational metric optimized within the range satisfying the constraint condition is displayed on the operational metric chart 52.

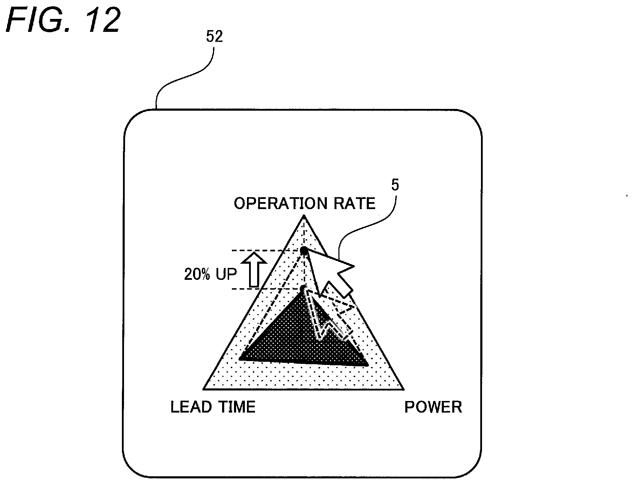

In the present system 1, the scheduler terminal 2 receives, via the user interface 22, a user operation of changing the size of any of the operational metrics by using the operational metric chart 52 displayed on the display 23, for example (S3). FIG. 12 illustrates an example of such a user operation.

FIG. 12 illustrates an example in which a simulation instruction is input from the example of FIG. 11. In this example, the user inputs a user operation to increase the operational metric "operating rate" by 20% by a drag operation of the cursor 5 operated in the user interface 22 of the scheduler terminal 2. In response to such a user operation, the scheduler terminal 2 issues a simulation instruction including the magnitude of the management indicator increased by the user operation as a change condition to the optimization server 3, for example (S4).

Then, the controller 30 of the optimization server 3 searches the search history database D20 (FIG. 10) for the manufacturing plan Mp corresponding to the change condition included in the simulation instruction (S14), and transmits information of the changed optimum manufacturing plan Mp to the scheduler terminal 2 (S15). In step S14, when a plurality of manufacturing plans Mp correspond to the change condition, the controller 30 extracts the manufacturing plan Mp having the smallest constraint violation amount among the plurality of manufacturing plans Mp narrowed down by the change condition, for example.

When the scheduler terminal 2 receives information on the simulation result from the optimization server 3 as a response to the simulation instruction, the scheduler terminal 2 updates the plan analyzing screen on the display 23 (S5). FIG. 13 illustrates an example of the plan analysis screen updated from the example of FIG. 11 after the user operation of FIG. 12.

In the plan display field 51 in FIG. 13, a schedule in which the arrangement of lot bands 50 is changed as a whole from that in FIG. 11 is displayed, reflecting that manufacturing plan Mp updated in step S5 is different from that before update. Further, in the present example, as the manufacturing plan Mp received at step S5 is based on the solution to the constraint violation, the display 23 of the scheduler terminal 2 highlights the lot band 50 for the lots La and Lb violating the constraint in the plan display field 51 as shown in FIG. 13.

For example, the highlighting of the lot band 50 of the constraint violation is addition of a frame enclosure or the like, change of color, hatching or the like, or blinking display. The constraint violation may be highlighted by adding a mark such as "!" or by a comment or the like. In the present system 1, the plan analysis screen may be updated so as to display the respective units 51 to 53 before and after the simulation (FIGS. 11 and 13) side by side.

For example, in step S5, the controller 20 may detect the lots La and Lb violating the constraints by comparing the updated manufacturing plan Mp with the lot constraint data D15. Alternatively, the optimization server 3 may store the identification information of the lots La and Lb violating the constraint in the search history database D20 or the like in advance, and may include the identification information in the information transmitted to the scheduler terminal 2 in step S15.

In the operational metric chart 52, the operation rate increases from before the update (FIG. 11) in accordance with the user instruction as illustrated in FIG. 13. In this example, other effect metrics in the operational metric chart 52 also change before and after the update. In the constraint violation table 53, as illustrated in FIG. 13, the deadline violation amounts of the products A and B for the lots La and Lb of the constraint violation are updated from zero values, for example.

As described above, according to the simulation operation of the present system 1, the effect in the new manufacturing plan Mp and the number of constraint violations occurring in the lots La and Lb can be specifically visualized to the user as the simulation result for obtaining the effect of the desired operational metric on the plan analysis screen (FIG. 13), for example.

In the present system 1, as illustrated in FIG. 12, by receiving a user operation requesting a change of the operational metric as a simulation instruction, the user can easily use the simulation operation of the present system 1 without particularly predicting how the constraint condition should be changed. In the present system 1, such a user instruction is not particularly limited to the example of FIG. 12, and may be a change of another operational metric in the operational metric chart 52, for example. For example, when a user instruction to reduce the "power" by a desired ratio is input, the present system 1 can realize a simulation operation by searching the search history database D20 in the same manner as in the above example, using the magnitude of the power after the reduction as a change condition.

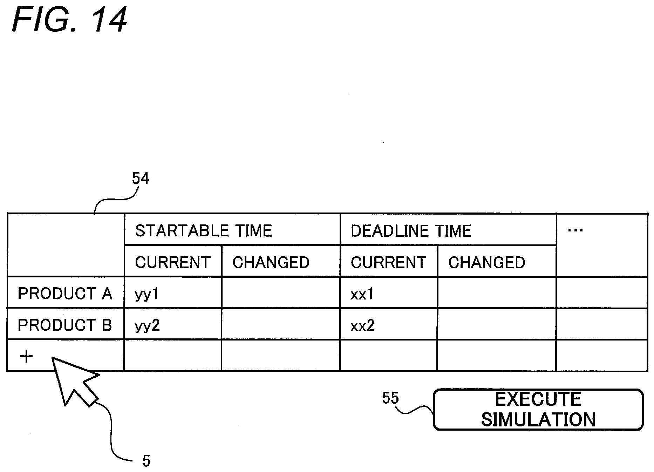

In the simulation operation of the user request in the present system 1 as described above, the user instruction is not limited to the change of the operational metric (FIG. 12), and may request a change of the constraint condition, for example. Such a modification will be described with reference to FIG. 14.

For example, the present system 1 may display a constraint change console 54 on the plan analysis screen or the like of the display 23, as illustrated in FIG. 14. The constraint change console 54 is a console for receiving a user operation for changing a constraint condition. For example, in step S4, the controller 20 of the scheduler terminal 2 receives a user operation on the constraint change console 54 by the user interface 22.

For example, the controller 20 receives a user operation of selecting a target lot whose constraint condition is to be changed using a "+" button or the like in the constraint change console 54 by the cursor 5 or the like, and a user operation of inputting a change value such as a deadline time for the selected lot. Thereafter, in response to a user operation of the simulation execute button 55, the controller 20 of the scheduler terminal 2 includes the changed constraint condition in a simulation instruction, to transmit the simulation instruction to the optimization server 3, for example (S4).

Then, the controller 30 of the optimization server 3 narrows down and searches the manufacturing plan Mp that matches the constraint condition after the change in the search history database D20 in response to the simulation instruction (S14). The optimization server 3 transmits the manufacturing plan Mp having the best management indicator such as the operation rate in the narrowing-down result to the scheduler terminal 2 as the simulation result (S15). In this way, the scheduler terminal 2 updates the plan analyzing screen of the display 23 so as to display the simulation result of the manufacturing plan Mp when the constraint condition is changed to the constraint condition requested by the user as a response to the simulation instruction (S5).

According to the above modification, the present system 1 can also perform the simulation operation of the user request by the processing with a light load such as the search of the search history database D20 without particularly redoing the computational optimization (S12). Further, the user can check the effect of changing the desired constraint condition by the operational metric chart 52 or the like on the plan analysis screen. Such a constraint change console 54 (FIG. 14) may be used in combination with the simulation instructions of the example of FIG. 12 described above.

### 2.4 Computational Optimization Processing

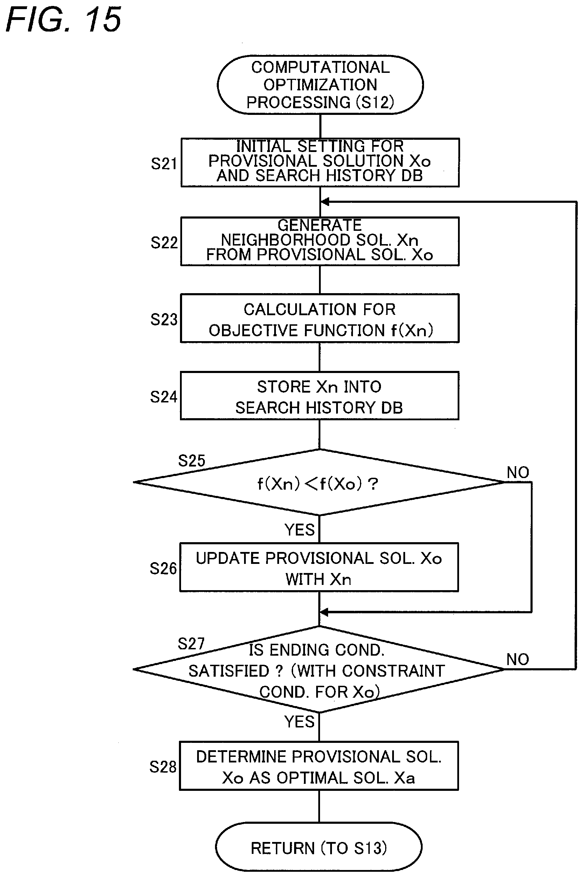

The details of the computational optimization processing in step S12 of FIG. 9 will be described with reference to FIG. 15. Each process illustrated in the flowchart of FIG. 15 is executed by the controller 20 of the optimization server 2, for example.

First, the controller 30 performs various initial settings in the computational optimization processing (S21). For example, the controller 30 sets a provisional solution Xo indicating a candidate for an optimal solution of the manufacturing plan Mp to an initial value, or prepares a search history database D20 in an initial state.

In step S21, the initial value of the provisional solution Xo is, for example, the pre-optimized manufacturing plan Mp included in the plan input data D10 acquired from the scheduler terminal 2 in step S11 (FIG. 9). For example, in step S21, the controller 30 generates the search history database D20 with a null value as an initial state.

Next, the controller 30 generates a neighborhood solution Xn from the current provisional solution Xo based on the set provisional solution Xo (S22). For example, the computational optimization of the present embodiment can be implemented as solving an optimization problem in which a constraint condition of the site 10 is imposed on a so-called traveling salesman problem.

The processing of the step S22 is performed by arithmetic processing of neighborhood operation such as insertion neighborhood or exchange neighborhood in the local search method. For example, the controller 30 determines the manufacturing time and the preparing time for each lot in the neighborhood solution Xn according to the change in the order of the lots for each facility 11 by the neighborhood operation from the provisional solution Xo (see D21 in FIG. 10). This determination is made by referring to the lot manufacturing time and the changeover time corresponding to the changed portion of the neighborhood solution Xn in the lot data D11 (FIG. 4) and the product changeover data D12 (FIG. 5), for example. The manufacturing start time and manufacturing end time of each lot and the energy consumption can be calculated based on the above determination results, the facility power data D13 (FIG. 6), the facility operation data D14 (FIG. 7), and the like.

Next, the controller 30 performs calculation of the objective function f(Xn) in the computational optimization based on the generated neighborhood solutions Xn (S23). The computational optimization of the present embodiment is performed for the purpose of minimizing the objective function f(Xn), for example. The objective function f(Xn) is configured by adding a penalty term of constraint violation to the total operating time for the manufacturing plan Mp of the neighborhood solution Xn, for example.

For example, in step S23, the controller 30 calculates operational metrics such as the total operation time, the total energy consumption, and the mean lead time, and various amounts regarding constraint violations such as the number of the deadline violation lots and the total deadline violation time (see D22 in FIG. 10). The calculation of the constraint violation can be performed based on the manufacturing end time of each lot of the neighborhood solution Xn and the lot constraint data D15 (FIG. 8). The penalty term of the objective function f(Xn) includes the amounts of the constraint violation described above, for example. The objective function f(Xn) may be configured using one or more of the above-described operational metrics additionally or alternatively to the total operating time. The penalty term may be omitted in the objective function f(Xn).

Next, in the present embodiment, the controller 30 stores the manufacturing plan Mp of the neighborhood solution Xn obtained as described above and the calculation results of the operational metrics and the constraint violations thereof in the search history database D20 (S24).

For example, in step S24, the controller 30 sequentially assigns plan IDs to the manufacturing plans Mp of the neighborhood solutions Xn, and stores the contents of the manufacturing plans Mp of the plan IDs in the history plan data D21 of the search history database D20, as illustrated in FIG. 10. Further, the controller 30 stores the calculation results of the various operational metrics and the constraint violations for the manufacturing plan Mp of the plan ID in the violation effect data D22 of the search history database D20. In this way, in the present embodiment, each time the neighborhood solution Xn is generated, a new manufacturing plan Mp is saved and accumulated in the search history database D20.

The controller 30 determines whether or not the objective function f(Xn) of the neighborhood solution Xn is less than the objective function f(Xo) of the provisional solution Xo (S25). The determination of the step S25 is performed to determine whether or not the objective function f(Xn) of the newly generated neighborhood solutions Xn is improved from the objective function f(Xo) of the current provisional solutions Xo.

When the objective function f(Xn) of the neighborhood solutions Xn is less than the objective function f(Xo) of the provisional solutions Xo (YES in S25), the controller 30 updates the provisional solutions Xo by replacing the neighborhood solutions Xn with the new provisional solutions Xo (S26).

On the other hand, when the objective function f(Xn) of the neighborhood solutions Xn is not less than the objective function f(Xo) of the provisional solutions Xo (NO in S25), the controller 30 keeps the provisional solutions Xo without updating (S25) the provisional solutions Xo, and proceeds to the processing of step S27.

Next, the controller 30 determines whether or not the current calculation state satisfies a predetermined condition for ending the computational optimization processing, that is, an ending condition (S27). For example, the ending condition includes that the number of times of calculation (S22) of the neighborhood solution Xn is equal to or larger than a predetermined number of times. For example, the predetermined number of times is set from the viewpoint of convergence of the objective function f(Xn), e.g., 100,000 to 1,000,000 times. The ending condition includes that the current provisional solution Xo satisfies the constraint condition. Thus, in the present embodiment, the optimal solution obtained as the output of the computational optimization processing (S12) is limited to the solution that satisfies the constraint condition.

When the ending condition is not satisfied (NO in S27), the controller 30 executes the processing in and after step S22 again. Accordingly, the controller 30 repeatedly performs the arithmetic processing (S22 to S25) including the generation (S22) of the neighborhood solution Xn, and the calculation result is accumulated in the search history database D20 (S23).

On the other hand, when the ending condition is satisfied (YES in S27), the controller 30 determines the current provisional solution Xo as the optimal solution Xa as the output of the computational optimization processing (S28). Thereafter, the controller 30 ends the computational optimization processing (S12 in FIG. 9) with the determined optimal solution Xa and the search history database D20 stored in the memory 31, and proceeds to step S13.

According to the above computational optimization processing (S12), in the present embodiment, the controller 30 can construct the search history database D20 including the solution of the constraint violation by the by-product while performing the numerical calculation for searching for the optimal solution satisfying the constraint condition. Such a search history database D20 can be constructed by a by-product discarded in a typical computational optimization, and the processing load can be suppressed.

In the above description, an example in which the optimal solution Xa of the output of the computational optimization processing (S12) satisfies the constraint condition has been described, but the present system 1 is not limited thereto, and the optimal solution Xa may not necessarily satisfy the constraint condition. For example, the ending condition of the step S27 may not include that the provisional solution Xo satisfies the constraint condition. Even in this case, the optimal solution Xa is limited by the constraint condition due to the penalty term of the objective function, for example. For example, in the plan analyzing screen (FIG. 11) displayed as the result of the computational optimization in the step S3, the user can check the degree of the constraint violation of the optimal solution Xa.

### 3. Review

As described above, in the plan optimization system 1 of the present embodiment, the optimization server 3, which is an example of a simulation device, that is, an example of an information processing device, includes the memory 31 and the controller 30. The memory 31 stores therein a plan input data D10 as an example of input data indicating the content of a plan to be optimized, such as the manufacturing plan Mp. The controller 30 executes an computational optimization in which a candidate of a plan optimized with respect to one or a plurality of operational metrics is repeatedly calculated based on the plan input data D10 (S12). The plan input data D10 includes lot constraint data D15, which is an example of a constraint condition that limits the plan optimized in the computational optimization. The controller 30 stores, in the memory 31, search history D20, which is an example of a computation history including a plan violating the constraint condition among a plurality of plans calculated as candidates in the computational optimization (S12, S24). The controller 30 refers to the plan included in the stored search history database D20, and generates simulation information (see FIG. 13) indicating a simulation result regarding improvement of at least a part of the operational metrics from the result of the computational optimization (S14).

According to the present system 1 described above, the search history database D20 of the computation history in the computational optimization is saved and utilized for generating the simulation information, thereby making it possible to facilitate performing the simulation for optimizing the plan having the constraint condition. For example, in the present system 1, the simulation information is generated with reference to the saved search history database D20, whereby the processing load of the simulation can be reduced and the calculation performance can be improved. In this way, the information processing device according to the present example embodiment can improve the practicality of a simulation technique for optimization of a plan having a constraint condition.

In the present embodiment, the controller 30 searches for one or more plans within a range including the violated plan in the stored search history database D20 based on a predetermined condition, and generates simulation information (S14). Accordingly, the simulation information can be generated by including the constraint violation solution in the search range for generating the simulation information, and the simulation for the optimization of the plan having the constraint condition can be easily performed.

In the present embodiment, the controller 30 generates simulation information based on the violated plan in the search history database D20 such that at least a part of the operational metrics indicates a simulation result improved in the case where the constraint condition is not satisfied, in comparison with that in the other case where the constraint condition is satisfied (see FIG. 13). This makes it possible to perform a simulation for trying to improve the operational metric due to the constraint violation, and to facilitate a simulation for optimizing a plan having a constraint condition.

In the present embodiment, the manufacturing plan Mp, which is an example of a plan, indicates a plurality of schedules that are sequentially performed, for example, for each lot in the site 10 where manufacturing is performed. The operational metric manages resources used for executing the manufacturing plan Mp in the site 10, such as total operating time, lead time, or power. According to the present system 1, for example, it is possible to easily perform simulation for optimization of a plan for efficiently managing resources in the manufacturing site 10.

In the present embodiment, for example, the optimization server 3 further includes the communication interface 32, which is an example of an output interface that outputs the simulation information so as to register a plan based on the simulation information in the management system 15 that manages the site 10. According to the present system 1, for example, by registration in the management system 15, a plan in which the operational metric is improved based on the simulation information from a state of being limited by the constraint condition can be reflected on the site 10, and an effect of improving the operational metric can be realized in the site 10.

In the present embodiment, the optimization server 3 further includes a communication interface 32 as an example of an input interface that inputs a user operation. The controller 30 generates simulation information (see S4, FIG. 13) with reference to the plan included in the search history database D20 in accordance with the user operation input in the communication interface 32 (see S14, S14). According to the present system 1, it is possible to make it easy for the user to perform simulation for optimization of a plan having a constraint condition.

In the present embodiment, the controller 30 receives a user operation for changing the target value of the management indicator (see FIG. 12), and generates simulation information by referring to a plan satisfying the target value changed by the user operation in the search history database D20 (S14). Accordingly, the user can obtain a simulation result by designating a desired target value of the operational metric, and can easily perform simulation for optimization of the plan.

In the present embodiment, the controller 30 receives a user operation for changing the constraint condition in the input interface (see FIG. 14), and generates simulation information by referring to a plan satisfying the constraint condition changed in the user operation in the search history database D20 (S14). Thus, the user can obtain a simulation result by instructing a change of a desired constraint condition, and can easily perform simulation for optimization of a plan.

In the present embodiment, the controller 30 displays initial information including a plan optimized in the computational optimization on a plan analyzing screen in the display 23, which is an example of a predetermined display screen, as illustrated in FIG. 11, for example (S13, S4). For example, various information of the output of the computational optimization processing (S12) are examples of the initial information. The controller 30 receives a user operation (S4, S14) in the inputting unit in a state in which such initial information is displayed on the display screen. This allows the user to instruct the simulation for a desired change after checking the initial information of the computational optimization, and to easily perform the simulation for the optimization of the plan.

In the present embodiment, after the user operation of step S4 is input, the controller 30 updates the plan analyzing screen to display the simulation information based on the generated simulation information (S15, S5, see FIG. 13). Accordingly, the present system 1 can dynamically update the plan analysis screen in response to the instruction of the simulation from the user, and can easily perform the simulation for the optimization of the plan.

In the present embodiment, the simulation information includes the degree of violation of the constraint condition, as in the constraint violation table 53, for example, by a specific plan output as a simulation result among the plurality of plans. In this way, the controller 30 notifies the degree of violation of the constraint condition by the plan together with the plan. Accordingly, the degree of violation of the constraint condition in the plan can be checked from the simulation information, and the simulation for the optimization of the plan having the constraint condition can be easily performed.

A simulation method as an example of the information processing method in the present embodiment includes a step (S11) in which a computer such as the optimization server 3 acquires plan input data D10 indicating the contents of a plan to be optimized, and a step (S12) in which the controller 30 executes computational optimization in which a candidate of a plan optimized with respect to one or a plurality of operational metrics is repeatedly calculated based on the plan input data D10. The plan input data D10 includes a constraint condition that limits the optimized plan in the computational optimization. The method includes a step (S12, S24) of storing, by the controller 30, a computation history including a plan violating the constraint condition among a plurality of plans calculated as candidates in the computational optimization in the memory 31 of the computer, and a step (S13) of generating simulation information indicating a simulation result regarding improvement of at least a part of the operational metrics from the result of the computational optimization with reference to the plan included in the stored computation history.

According to the above simulation method, it is possible to facilitate the simulation for the optimization of the plan having the constraint condition. In the present embodiment, a program for causing a controller of a computer to execute such a simulation method or information processing method may be provided. The method may improve the practicality of simulation techniques for optimizing a plan with constraints.

In the present embodiment, the plan optimization system 1 is an example of a simulation system including an optimization server 3, which is an example of a simulation device, and a scheduler terminal 2, which is an example of an information terminal that performs data communication with the optimization server 3 and displays simulation information. According to the present system 1, for example, the optimization server 3 and the scheduler terminal 2 connected via a communication network can facilitate simulation of optimization of a plan having a constraint condition.

### Second Embodiment

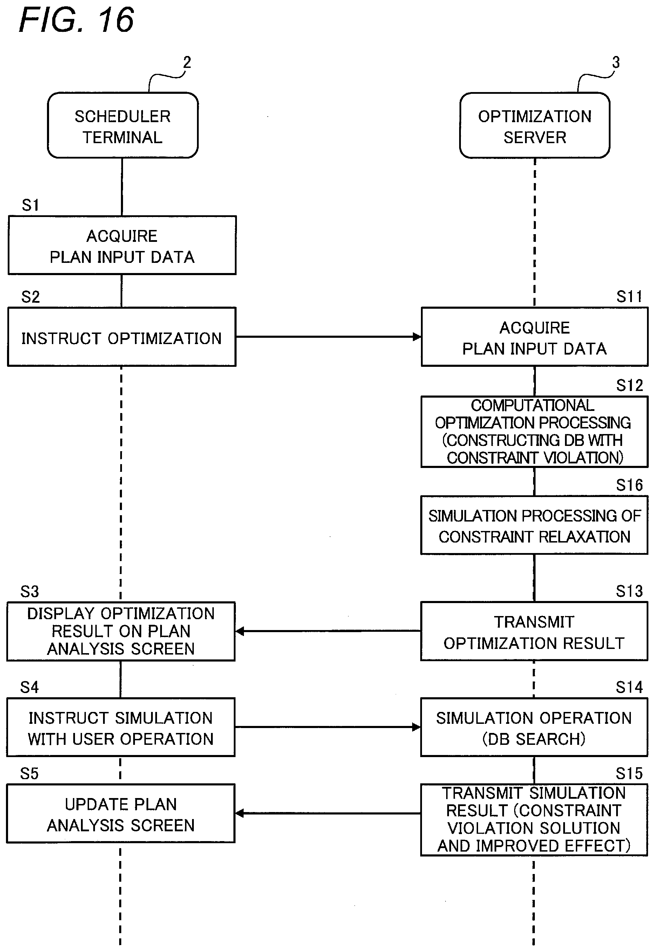

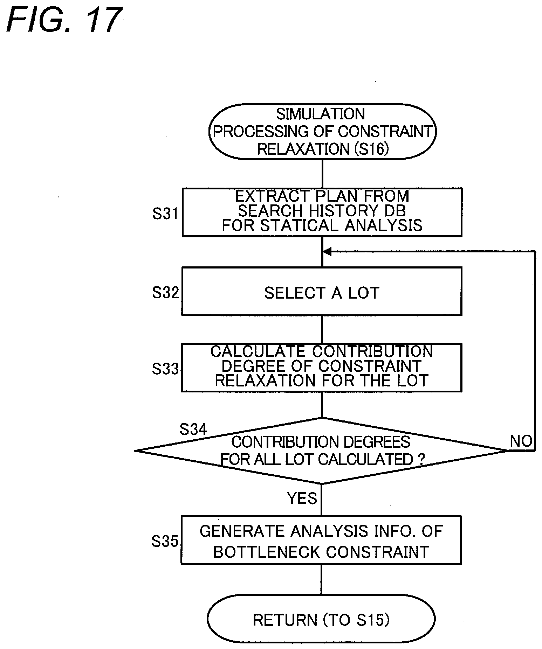

Hereinafter, a second embodiment will be described with reference to FIGS. 16 and 17. In the first embodiment, the plan optimization system 1 that performs the simulation according to the user request has been described. In the second embodiment, a plan optimization system 1 that automatically performs a simulation will be described.

Hereinafter, the plan optimization system 1 according to the present embodiment will be described while omitting, as appropriate, the description of the same configuration and operation as those of the plan optimization system 1 according to the first embodiment.

FIG. 16 is a sequence diagram for explaining the operation of the plan optimization system 1 according to the second embodiment. In the plan optimizing system 1 of the present embodiment, the scheduler terminal 2 and the optimization server 3 perform the same operations as those of the first embodiment, and in addition, the optimization server 3 performs simulation processing of constraint relaxation (S12) after computational optimization processing (S16), for example.

In the simulation processing (S16) of constraint relaxation of the present embodiment, the relaxation of the constraint condition is simulated by the statistic analysis over the plurality of stored manufacturing plans Mp using the search history database D20 constructed in the computational optimization processing (S12). In the following, a description will be given of an example of processing in which such simulation processing (S16) is performed so as to analyze a constraint condition, i.e. a bottleneck constraint, for which an improvement in effect by relaxation is expected.

FIG. 17 is a flowchart illustrating simulation processing (S16) of constraint relaxation in the present system 1. For example, the process illustrated in the flowchart of FIG. 17 is started with the search history database D20 stored in the memory 31 of the optimization server 3, and is executed by the controller 30.

First, the controller 30 extracts the manufacturing plans Mp satisfying a predetermined condition from the search history database D20 as targets of statistical analyses (S31). The predetermined condition is set from the viewpoint of searching for narrowing down the object to be analyzed, and is set, for example, to be that the total operating time as the objective function f () is shorter than that of the manufacturing plan Mp of the optimal solution Xa without constraint violation obtained as a result of the computational optimization processing (S12). As a result, the constraint violation solution in which the objective function f () is improved by the constraint violation can be set as the following analysis target.

Next, the controller 30 selects one lot at a time from the lot data D11 in the plan input data D10 acquired in the step S11, for example (S32). The selection of the step S32 is performed to analyze each constraint violation such as a deadline violation of each lot.

Next, the controller 30 calculates the contribution degree of the constraint relaxation for the selected lot by, for example, the calculation of the following expression (1) based on the manufacturing plan Mp extracted from the search history database D20 (S33). The contribution degree of the constraint relaxation indicates a degree to which the objective function f () such as the total operating time is estimated to be reduced by relaxing the constraint of the lot.

[Math. 1] $\frac{1}{\left|{S}_{x}\right|} {\sum }_{s ∈ {S}_{x}} \frac{f \left({s}_{a}\right) - f \left(s\right)}{{\sum }_{l ∈ L} {V}_{s , l}} ∗ \frac{{V}_{s , x}}{{\sum }_{l ∈ L} {V}_{s , l}}$ (1)

In the above expression (1), the set Sx is a set of the manufacturing plans Mp in which the lot x violates the constraint among the manufacturing plans Mp to be analyzed extracted in the step S31, and |Sx| indicates the number of the manufacturing plans s which are elements in the set Sx. In the above expression (1), the sum of all the manufacturing plans s in the set Sx is calculated. The optimal plan sa indicates an optimal solution Xa that does not violate the constraint. The set L is a set of lots I included in the lot data D11. The constraint violation amount Vs,l is an amount such as the length of the deadline violation time of the lot I in the manufacturing plan s. In the above expression (1), the sum of the constraint violation amounts Vs,l for all the lots I in the set L is taken.

For example, when the contribution degree of the constraint relaxation is not calculated for all the lots in the lot data D11 (NO in S34), the controller 30 newly selects a lot for which the contribution degree is not calculated (S32), and performs the processing of step S33 again. In this way, the contribution degree of the constraint relaxation as in the above formula (1) is calculated for all the lots (S32 to S34).

When the contribution degree of the constraint relaxation is calculated for all the lots (YES in S34), based on the calculated contribution degree of the constraint relaxation, the controller 30 generates analysis information of the bottleneck constraint, for example (S35). The bottleneck constraint is specified as a constraint condition of a lot having a relatively high contribution degree among constraint conditions such as a deadline time of each lot. According to such a bottleneck constraint, it can be expected that a reduction in the total operation time and the like can be obtained relatively significantly by the relaxation.

For example, in step S35, the controller 30 generates information indicating the lots having the highest contribution degree of the constraint relaxation in all the lots in a ranking format as the analysis information of the bottleneck constraint. Such analysis information may include information on all the lots, or may be limited to information on a predetermined number of upper lots. The analysis information of the bottleneck constraint is an example of simulation information in the present embodiment.

For example, the controller 30 of the optimization server 3 stores the analysis information of the bottleneck constraint generated in step S35 in the memory 31, ends the simulation processing of constraint relaxation (S16 in FIG. 16), and proceeds to step S15. At this time, the optimization server 3 includes the result of the simulation processing (S16) of the constraint relaxation such as the analysis information of the bottleneck constraint in the information transmitted to the scheduler terminal 2 in step S15, for example.

According to the above processing, the present system 1 can automatically perform simulation of constraint violation for improving an operational metric such as a total operation time by statistical analysis using a plurality of constraint violation solutions obtained as by-products of computational optimization.

As described above, in the plan optimizing system 1 of the present embodiment, the controller 30 performs statistical analyses on a plurality of plans included in the stored search history database D20, and generates simulation information to indicate a simulation result in which at least a part of the operational metrics is improved when the constraint condition is relaxed (S31 to S35). According to the present system 1, it is possible to facilitate simulation of optimization of a plan having a constraint condition by utilizing a computation history of computational optimization by statistical analysis.

### Other Embodiments

As described above, the first and second embodiments have been described as examples of the technique disclosed in the present application. However, the technique in the present disclosure is not limited to this, and is applicable to embodiments in which changes, replacements, additions, omissions, and the like are made as appropriate. In addition, it is also possible to combine the respective constituent elements described in the above respective embodiments to form a new embodiment. Therefore, other embodiments will be exemplified below.

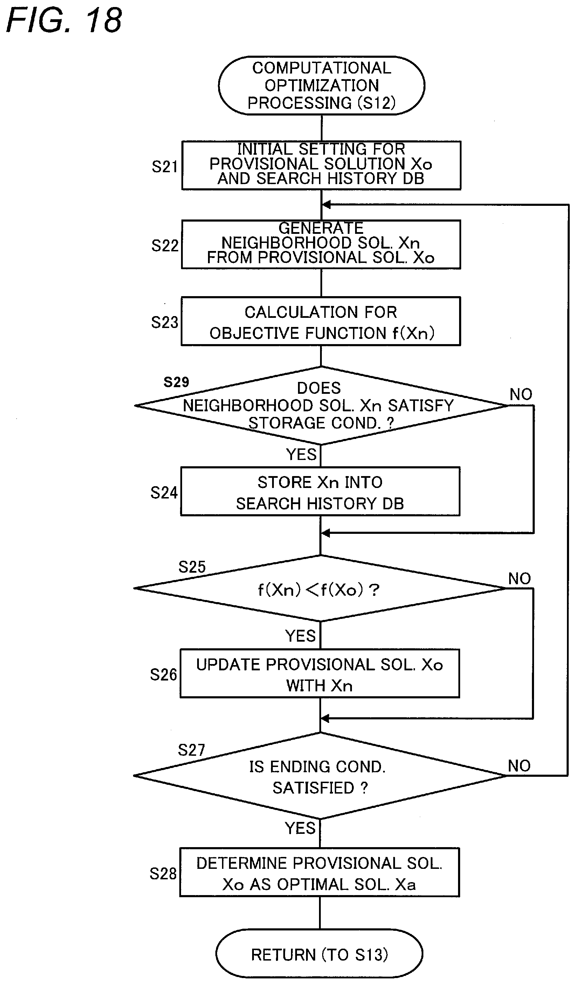

In the first embodiment, an example of the computational optimization processing (S12) in the present system 1 has been described, but the computational optimization processing of the present embodiment is not limited thereto. For example, in the first embodiment (FIG. 15), all the neighborhood solutions Xn to be calculated are stored in the search history database D20, but all the neighborhood solutions Xn may not be stored. Such a modification will be described with reference to FIG. 18.

FIG. 18 is a flowchart illustrating computational optimization processing in the first modification of the present system 1. In the present modification, the controller 30 determines whether or not the neighborhood solution Xn generated in step S22 satisfies a predetermined storage condition (S20), in addition to the execution of steps S21 to S28 similar to the computational optimization processing (FIG. 15) of the first embodiment. The storage condition indicates a rule for narrowing down the solution candidates to be stored in the search history database D20, and is set from the viewpoint of usability presumed to be referred to in a subsequent simulation operation, for example.

For example, the storage condition of the step S20 is set to the following condition (I) and condition (II).
(I) The total operating time of the neighborhood solution Xn is below the total operating time of the current provisional solution Xo.
(II) The constraint violation penalty term is below a threshold value indicative of a predetermined tolerance.

According to the above storage condition, the storage target can be narrowed down from the provisional solution Xo to the neighborhood solution Xn in which the operational metric such as the total operating time is improved by the condition (I). The storage target can be narrowed down to the neighborhood solution Xn in which the constraint violation is within the allowable range by the condition (II).

In the present modification, when the controller 30 determines that the neighborhood solution Xn satisfies the storage condition (YES in S20), the controller 30 stores the neighborhood solution Xn in the search history database D20 (S24). On the other hand, when the controller 30 determines that the neighborhood solution Xn does not satisfy the storage condition (NO in S20), the controller 30 does not store the neighborhood solution Xn in the search history database D20, and proceeds to step S25, for example.

According to the computational optimization processing (S12) of the present modification as described above, it is possible to narrow down the solution candidates to be included in the search history database D20 on the basis of the rule of the storage condition and suppress the amount of database to be constructed. For example, by not storing a solution candidate that is presumed not to be referred to in the simulation operation in the search history database D20, the amount of the search history database D20 can be reduced.

As described above, in the plan optimizing system 1 of the present embodiment, the controller 30 narrows down the plans to be stored in the memory 31 as the search history database D20 from the plurality of plans calculated as candidates in the computational optimization according to a predetermined rule such as the storage condition (S20). This reduces the amount of the search history database D20, and enables the search history database D20 to be efficiently stored.

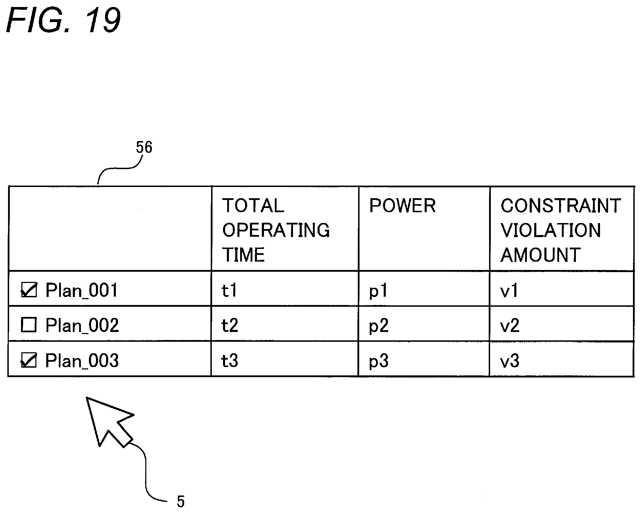

In the plan optimizing system 1 of the present embodiment, the computational optimization processing (S12) is not limited to optimizing a single objective function, and may be performed by multi-objective optimizing. Such a modification will be described with reference to FIG. 19.

FIG. 19 is a diagram for explaining a second modification of the present system 1. FIG. 19 illustrates a plan list 56 displayed on the display 23 of the scheduler terminal 2. The plan list 56 is a user interface that displays a list of a plurality of plans, and an operational metric, a constraint violation amount, and the like of each plan, and receives a selection of a user from the list.

In the present system 2, for example, the optimization server 3 performs computational optimization processing (S12) by multi-objective optimizing for a plurality of objective functions corresponding to a plurality of operational metrics, and outputs information indicating a Pareto solution as a processing result to the scheduler terminal 2. The Pareto solution constitutes a set of optimal solutions that compete among the objective functions. At this time, the scheduler terminal 2 may display a plan list 56 of Pareto solutions as illustrated in FIG. 19, for example, when displaying the plan analysis screen on the display 23.

For example, the controller 20 of the scheduler terminal 2 receives, via the user interface 22, a user operation of selecting one or more manufacturing plans Mp from among the plurality of plans in the plan list 56. For example, when two manufacturing plans Mp are selected by the user, the controller 20 may display the selected manufacturing plans Mp on the plan analysis screen of the display 23 so that the user can compare the two manufacturing plans.

In the present system 1, the plan list 56 is not necessarily limited to the Pareto solution, and may be displayed for various plans. The user may use the plan list 56 to compare the initial manufacturing plan Mp before optimization with the manufacturing plan Mp of the optimization result, for example. Alternatively, various plans in the search history database D20 constructed during the computational optimization processing (S12) may be displayed in the plan list 56 in a selectable manner.

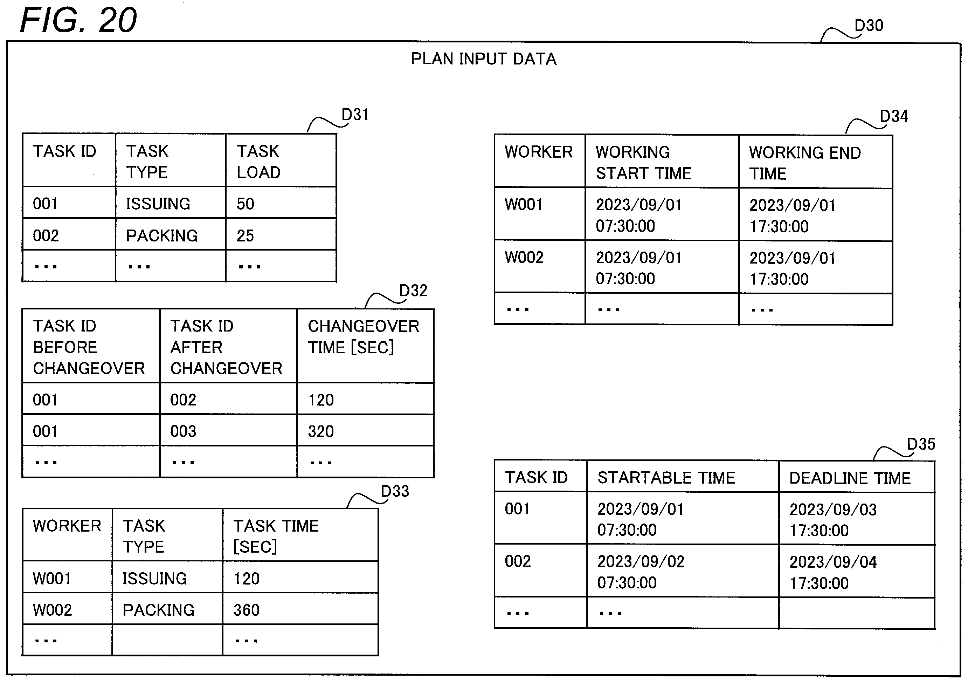

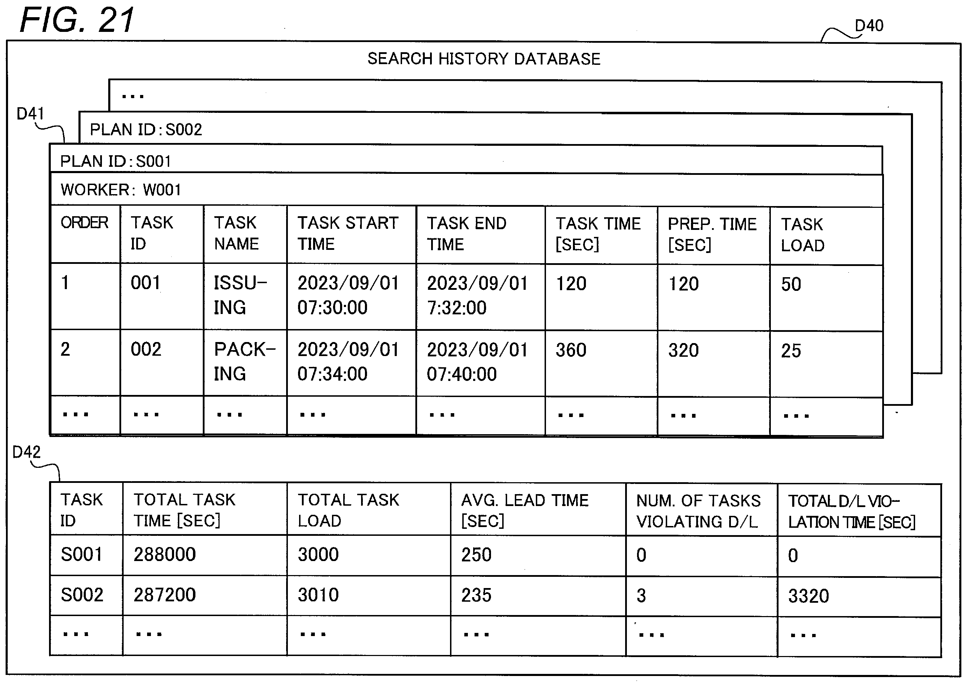

In the above-described embodiments, an example in which the plan optimization system 1 is applied to the site 10 such as a manufacturing factory has been described, but the present system 1 is not particularly limited thereto. The present system 1 is applicable to various sites such as various manufacturing, physical distribution, or distribution sites. Such a modification will be described with reference to FIGS. 20 and 21.

FIG. 20 illustrates a structure of the plan input data D30 in the third modification of the plan optimizing system 1. FIG. 21 illustrates a structure of the search history database D40 in the present modification.

For example, in a work site such as a logistics base, a work plan is used in which various tasks such as shipping and packing are assigned to each worker. In such a work site, the present system 1 uses a plan input data D10 of the work site as illustrated in FIG. 20, instead of the plan input data D30 (FIGS. 4 to 8) of the first embodiment, for example. For example, the plan input data D30 of the present modification includes task data D31, task changeover data D32, task time data D33, working time data D34, and task constraint data D35 as illustrated in FIG. 20, instead of the various data D11 to D15 of the first embodiment.

For example, the task data D31 manages tasks as a plan target instead of a lot in the lot data D11 (FIG. 4) of the first embodiment. The task changeover data D32 manages the changeover time between tasks instead of the product changeover data D12 (FIG. 5). The task time data D33 manages the task time of the worker instead of the facility power data D13 (FIG. 6). The working time data D34 manages the working time of the worker instead of the facility operation data D14 (FIG. 7). The task constraint data D35 manages the task constraint condition in place of the lot constraint data D15 (FIG. 8).

The plan optimizing system 1 of the present modification constructs a search history database D40 as illustrated in FIG. 21 when performing the computational optimization processing (S12), as in the first embodiment, based on the above-described plan input data D30 (FIG. 20), for example. The search history database D40 of the present modification includes plan data D41 and violation effect data D42 for the work site, for example, as a configuration similar to that of the search history database D20 (FIG. 10) of the first embodiment. According to the present system 1, even in the above-described work site, as in the first embodiment, various subsequent simulation operations can be realized with high calculation efficiencies by using the search history database D40 obtained as a by-product of the computational optimization.

In the work site of the present system 1, the worker is not particularly limited to a human, and may be an AGV (automatic guided vehicle) or various robots, for example. The workload is not limited to the human workload, and may be various workloads that consume various resources for performing the work. For example, the various resources include a time resource, an energy resource, and a hardware resource.

As described above, in the plan optimization system 1 of the present embodiment, the target plan may indicate a plurality of schedules to be sequentially performed at a site where at least one of manufacturing, logistics, or distribution is performed, for example. The operational metric may manage resources used for execution of the plan in the field.

In the present system 1, the operational metric may be a metric for managing at least one of the production amount, the power consumption amount, the emission amount of carbon dioxide, the facility operating time, the work load, or the like in various sites. The present system 1 is applicable to optimization of a plan for managing various resources at sites of various supply chains. The present system 1 can facilitate the simulation of the changes of various constraint conditions that may occur in such various sites by utilizing the computation history of the computational optimization as in the above embodiments.

In the above embodiments, the optimization server 3 has been described as an example of the simulation device in the present system 1, but the simulation device of the present embodiment is not limited thereto. In the present embodiment, the scheduler terminal 2 may be an example of the simulation device. For example, the scheduler terminal 2 may execute the computational optimization processing (S12) and various simulations (S13, S16). In this case, the optimization server 3 may be omitted in the present system 1. In the present embodiment, a simulation device may be realized by cooperation of the scheduler terminal 2 and the optimization server 3. For example, a part of the processing of the steps S12, S13, and S16 may be performed by the scheduler terminal 2.

### Aspect Examples

Hereinafter, aspects according to the present disclosure will be illustrated.

A first aspect according to the present disclosure is an information processing device including a memory configured to store input data to be optimized; and a controller configured to perform computational optimization, based on the input data, the computational optimization including iteratively computing a candidate of a solution optimized with respect to one or more operational metrics. The input data includes a constraint condition that limits the optimized solution in the computational optimization. The controller is configured to: store a computation history into the memory, the computation history including a solution violating the constraint condition among a plurality of solutions computed as candidates in the computational optimization; and generate a plan with reference to the stored computation history, the plan improving at least a part of the operational metrics from a result of the computational optimization. Each of the various solutions may be intermediate data temporarily stored in a storage area during processing in which the computational optimization is executed in hardware resources such as the controller and the memory, or may be a calculation solution calculated while allowing a violation of the constraint condition during the processing.

The information processing device according to the various aspects may be a simulation device. The input data may indicate the content of the plan to be optimized. Each solution may be a respective plan. The controller may store, in the memory, a computation history including a plan violating the constraint condition among the plurality of plans calculated as candidates in the computational optimization, and generate simulation information indicating a simulation result related to improvement of at least a part of the operational metrics from the result of the computational optimization with reference to the plan included in the stored computation history.

According to a second aspect, in the information processing device according to the first aspect, the controller is configured to search for one or more solutions within a range including the violated solution in the stored computation history based on a predetermined condition, to generate the plan.

According to a third aspect, in the information processing device according to the first or second aspect, the controller is configured to generate, based on the violated solution in the computation history, the plan that improves at least the part of the operational metrics in a case where the constraint condition is not satisfied, compared to another case where the constraint condition is satisfied.

According to a fourth aspect, in the information processing device according to any one of the first to third aspects, the plan indicates a plurality of schedules to be performed in turn at a site where at least one of manufacturing, logistics, or distribution is performed. The operational metrics manage resources used for execution of the plan at the site.

A fifth aspect is the information processing device according to the fourth aspect, further including an output interface configured to output the plan to a management system to register the plan, the management system being configured to manage the site.

In a sixth aspect, the information processing device according to any one of the first to fifth aspects further includes an input interface configured to input a user operation. The controller is configured to generate the plan with reference to a solution included in the computation history in accordance with the user operation input in the input interface.

According to a seventh aspect, in the information processing device according to the sixth aspect, the controller is configured to: receive the user operation for changing a target value in the operational metrics via the input interface; and generate the plan with reference to a solution satisfying the target value changed by the user operation in the computation history.

According to an eighth aspect, in the information processing device according to the sixth or seventh aspect, the controller is configured to: receive the user operation for changing the constraint condition via the input interface; and generate the plan with reference to a solution satisfying the constraint condition changed by the user operation in the computation history.

According to a ninth aspect, in the information processing device according to any one of the sixth to eighth aspects, the controller is configured to: display initial information on a predetermined display screen, the initial information including the plan based on the optimized solution in the optimization calculation; and receive the user operation via the input interface with the initial information being displayed on the display screen.

According to a tenth aspect, in the information processing device according to the ninth aspect, the controller is configured to update the display screen to display the plan generated after the user operation is input.

According to an eleventh aspect, in the information processing device according to any one of the first to tenth aspects, the controller is configured to notify, with the plan, a degree for the plan to violate the constraint condition.

According to a twelfth aspect, in the information processing device according to any one of the first to eleventh aspects, the controller is configured to perform statistical analysis on the plurality of solutions included in the stored computation history, to generate the plan such that at least the part of the operational metrics is improved when the constraint condition is relaxed.

According to a thirteenth aspect, in the information processing device according to any one of the first to twelfth aspects, the controller is configured to narrow down a solution to be stored from the plurality of solutions according to a predetermined rule, the solution to be stored being stored in the memory as the computation history, the plurality of solutions being computed as the candidates in the computational optimization.

A fourteenth aspect is an information processing method including: acquiring input data to be optimized by a computer; and performing, by a controller of the computer, computational optimization based on the input data, the computational optimization including iteratively computing a candidate of a solution optimized with respect to one or more operational metrics. The input data includes a constraint condition that limits the optimized solution in the computational optimization. The method includes: storing, by the computer, a computation history into a memory of the computer, the computation history including a solution violating the constraint condition among a plurality of solutions computed as candidates in the computational optimization; and generate, by the computer, a plan with reference to the stored computation history, the plan improving at least a part of the operational metrics from a result of the computational optimization.

A fifteenth aspect is a program for causing a controller of a computer to execute the information processing method according to the fourteenth aspect.

A sixteenth aspect is a simulation system including the information processing device according to any one of the first to thirteenth aspects, and an information terminal configured to communicate data with the information processing device and display simulation information such as a generated plan.

As described above, the exemplary embodiments have been described as examples of the technique in the present disclosure. For this purpose, the accompanying drawings and the detailed description are provided.

Therefore, the components described in the accompanying drawings and the detailed description may include not only components essential for solving the problem but also components not essential for solving the problem in order to illustrate the above technique. Therefore, it should not be immediately recognized that the non-essential components are essential because the non-essential components are described in the accompanying drawings and the detailed description.

In addition, since the above-described exemplary embodiments are intended to illustrate the technique in the present disclosure, various changes, substitutions, additions, omissions, and the like can be made within the scope of the claims or the scope of equivalents thereof.

### Industrial Applicability

The present disclosure is applicable to simulation of a plan with constraints, for example, simulation in a manufacturing, logistics and distribution site.

## Claims

1. An information processing device comprising:
a memory configured to store input data to be optimized; and
a controller configured to perform computational optimization, based on the input data, the computational optimization including iteratively computing a candidate of a solution optimized with respect to one or more operational metrics, wherein
the input data includes a constraint condition that limits the optimized solution in the computational optimization, and
the controller is configured to:
store a computation history into the memory, the computation history including a solution violating the constraint condition among a plurality of solutions computed as candidates in the computational optimization; and
generate a plan with reference to the stored computation history, the plan improving at least a part of the operational metrics from a result of the computational optimization.

2. The information processing device according to claim 1, wherein the controller is configured to search for one or more solutions within a range including the violated solution in the stored computation history based on a predetermined condition, to generate the plan.

3. The information processing device according to claim 1 or 2, wherein the controller is configured to generate, based on the violated solution in the computation history, the plan that improves at least the part of the operational metrics in a case where the constraint condition is not satisfied, compared to another case where the constraint condition is satisfied.

4. The information processing device according to claim 1 or 2, wherein
the plan indicates a plurality of schedules to be performed in turn at a site where at least one of manufacturing, logistics, or distribution is performed, and
the operational metrics manage resources used for execution of the plan at the site.

5. The information processing device according to claim 4, further comprising an output interface configured to output the plan to a management system to register the plan, the management system being configured to manage the site.

6. The information processing device according to claim 1 or 2,
further comprising an input interface configured to input a user operation,
wherein the controller is configured to generate the plan with reference to a solution included in the computation history in accordance with the user operation input in the input interface.

7. The information processing device according to claim 6, wherein the controller is configured to:
receive the user operation for changing a target value in the operational metrics via the input interface; and
generate the plan with reference to a solution satisfying the target value changed by the user operation in the computation history.

8. The information processing device according to claim 6, wherein the controller is configured to:
receive the user operation for changing the constraint condition via the input interface; and
generate the plan with reference to a solution satisfying the constraint condition changed by the user operation in the computation history.

9. The information processing device according to claim 6, wherein the controller is configured to:
display initial information on a predetermined display screen, the initial information including the plan based on the optimized solution in the optimization calculation; and
receive the user operation via the input interface with the initial information being displayed on the display screen.

10. The information processing device according to claim 9, wherein the controller is configured to update the display screen to display the plan generated after the user operation is input.

11. The information processing device according to claim 1 or 2, wherein the controller is configured to notify, with the plan, a degree for the plan to violate the constraint condition.

12. The information processing device according to claim 1 or 2, wherein the controller is configured to perform statistical analysis on the plurality of solutions included in the stored computation history, to generate the plan such that at least the part of the operational metrics is improved when the constraint condition is relaxed.

13. The information processing device according to claim 1 or 2, wherein the controller is configured to narrow down a solution to be stored from the plurality of solutions according to a predetermined rule, the solution to be stored being stored in the memory as the computation history, the plurality of solutions being computed as the candidates in the computational optimization.

14. An information processing method comprising:
acquiring input data to be optimized by a computer; and
performing, by a controller of the computer, computational optimization based on the input data, the computational optimization including iteratively computing a candidate of a solution optimized with respect to one or more operational metrics, wherein
the input data includes a constraint condition that limits the optimized solution in the computational optimization, and
the method further comprises:
storing, by the computer, a computation history into a memory of the computer, the computation history including a solution violating the constraint condition among a plurality of solutions computed as candidates in the computational optimization; and
generate, by the computer, a plan with reference to the stored computation history, the plan improving at least a part of the operational metrics from a result of the computational optimization.

15. A program for causing the controller of the computer to execute the information processing method according to claim 14.
